# EUROPEAN PATENT APPLICATION

(11) **EP 4 421 954 A1**
(43) Date of publication of application: **28.08.2024**
(21) Application number: 23197613.5
(22) Date of filing: 15.09.2023
(51) Int. Cl.: H01M 50/204, H01M 50/284, H01M 50/519, H01M 50/543

(54) **BATTERY MODULE AND BATTERY PACK**

(30) Priority: 21.02.2023 CN 202320276490 U
(71) Applicant: AESC Japan Ltd., Zama-shi, Kanagawa 252-0012 (JP)
(72) Inventor: HE, Yafei, Jiangyin City, Wuxi City (CN); ZHANG, Maomao, Jiangyin City, Wuxi City (CN)
(74) Representative: Becker, Eberhard

(57) **Abstract**

The disclosure provides a battery module (100) and a battery pack. The battery module (100) includes a frame (10), a plurality of cells (20), and an output terminal base (30). The frame (10) includes side plates (11) opposite to each other and a first and a second end plates (12, 13) opposite to each other. The cells (20) are stacked and installed in the frame (10). The output terminal base (30) includes a high-voltage and a low-voltage output terminal installation portions (32) arranged side by side, and a limiting portion (33) formed by extending from a bottom portion of the low-voltage output terminal installation portion (32). A top portion of the first end plate (12) is provided with a limiting groove (121) wherein the limiting portion (33) is installed and an installation groove (122) wherein the high-voltage output terminal installation portion (31) is installed.

## Description

### BACKGROUND

### Technical Field

The disclosure belongs to the technical field of batteries, and in particular, involves a battery module and a battery pack.

### Description of Related Art

At present, a battery module includes a frame and a plurality of cells accommodated in the frame. The cells are electrically connected through a conductive connection sheet to achieve the series connection of the cells. The module is provided with a high-voltage output sheet, which is used for series connection between adjacent modules or direct output of electric energy. For the sake of electrical safety, the connection strength between the high-voltage output sheet and the module needs to meet specific requirements. At present, the common arrangement is to allow the end plate of the frame of the module to be designed with an output terminal base. The output terminal base is fixed on the end plate, and the high-voltage output sheet is fixed in the base. Further, in order to monitor the working status of the cells, the module also includes a low-voltage sampling component configured to collect the voltage and temperature information of the module and share the information with external apparatuses. Generally, the sampling assembly also needs to be fixed to the module.

As a preliminary integrated battery module, the battery module needs to collect and output its electrical signals and temperature signals and needs to use a conductive sheet to output its electrical energy to an electrical apparatus. Both functions may be integrated into one assembly. Generally, the module has a frame structure to provide strength for itself, and the frame structure includes opposite side plates and opposite end plates. The end plate of the module is provided with an output terminal fixing base. At this stage, the commonly used measure in the industry is to fix the output terminal base on the end plate through bolts. However, the currently-available installation method faces the problem of unreliable fixing between a high-voltage output terminal and an FPC low-voltage connector.

### SUMMARY

In view of the abovementioned shortcomings of the related art, the disclosure aims to provide a battery module and a battery pack to address the problem of unreliable fixing between a high-voltage output terminal and an FPC low-voltage connector found in the currently-available installation method for an output terminal base.

To achieve the above and other related purposes, the disclosure provides a battery module including a frame, a plurality of cells, and an output terminal base.

The frame includes side plates opposite to each other and a first end plate and a second end plate opposite to each other.

The plurality of cells are stacked and installed in the frame.

The output terminal base includes a high-voltage output terminal installation portion, a low-voltage output terminal installation portion, and a limiting portion. The high-voltage output terminal installation portion and the low-voltage output terminal installation portion are arranged side by side, and the limiting portion is formed by extending from a bottom portion of the low-voltage output terminal installation portion.

Herein, a top portion of the first end plate is provided with a limiting groove and an installation groove. The high-voltage output terminal installation portion is installed in the installation groove, and the limiting portion is installed in the limiting groove to connect the output terminal base to the first end plate.

In an embodiment of the disclosure, the battery module further includes a cells contact system assembly, and the cells contact system assembly is electrically connected to the cells. The cells contact system assembly includes a sampling assembly and a high-voltage output sheet. The sampling assembly includes a flexible circuit board and a low-voltage connector, and the flexible circuit board is electrically connected to the cells. The low-voltage connector is installed on the low-voltage output terminal installation portion and is electrically connected to the flexible circuit board. The high-voltage output sheet is installed in the high-voltage output terminal installation portion and is electrically connected to the cells.

In an embodiment of the disclosure, a threaded hole is arranged in the high-voltage output terminal installation portion. The high-voltage output sheet is installed on the high-voltage output terminal installation portion, and a through hole corresponding to the threaded hole is arranged on the high-voltage output sheet.

In an embodiment of the disclosure, the first end plate or the second end plate is provided with a plurality of weight-reducing holes. The weight-reducing holes pass through the limiting groove or the installation groove.

In an embodiment of the disclosure, the low-voltage output terminal installation portion further includes hook structures. The hook structures are formed by extending from both sides of a top portion of the low-voltage output terminal installation portion in a direction away from the low-voltage output terminal installation portion.

In an embodiment of the disclosure, the battery module further includes a reinforcing plate. The reinforcing plate is installed on the low-voltage output terminal installation portion and is located above the low-voltage connector. Both ends of the reinforcing plate are engaged with and connected to the hook structures.

In an embodiment of the disclosure, protrusions are formed on both ends of the reinforcing plate. The protrusion at each end is located between the hook structures on a same side of the low-voltage output terminal installation portion.

In an embodiment of the disclosure, the limiting groove is formed by extending from an inner side to an outer side of the first end plate in a thickness direction of the first end plate. An outer side wall of the first end plate closes an end surface of the limiting groove.

In an embodiment of the disclosure, the limiting portion includes a first limiting portion, a second limiting portion, and a third limiting portion. The first limiting portion and the second limiting portion are formed by extending away from a vertical direction. The third limiting portion is located between the first limiting portion and the second limiting portion and is arranged in the vertical direction. The limiting groove includes a first limiting groove, a second limiting groove, and a third limiting groove respectively corresponding to the first limiting portion, the second limiting portion, and the third limiting portion. The first limiting portion, the second limiting portion, and the third limiting portion are respectively installed in the first limiting groove, the second limiting groove, and the third limiting groove in a thickness direction of the end plate to fix the output terminal base.

In an embodiment of the disclosure, at least one of the first limiting portion and the second limiting portion is provided with a sub-limiting portion. The limiting groove is provided with a sub-limiting groove, and the sub-limiting portion is connected to the sub-limiting groove in a concave-convex manner to form a limiting structure.

In an embodiment of the disclosure, the limiting portion is a plurality of elastic members, and the elastic members are engaged in the limiting groove.

In an embodiment of the disclosure, the output terminal base is a plastic member.

The disclosure further provides a battery pack including a box body. The battery module according to the above is installed in the box body.

The disclosure provides a battery module and a battery pack. In the battery module, after the output terminal base is installed on the end plate, the inner surface of the end plate is close to the main bodies of the cells, it is thus difficult for the limiting portion on the bottom portion of the output terminal base to be detached from the limiting groove on the end plate, and a good limiting effect is thereby provided. Further, the high-voltage output terminal installation portion and the low-voltage output terminal installation portion are integrated on the output terminal base. In this way, a simple structure and high integration are provided, and compatibility with the cells contact system assembly is achieved. Further, the limiting groove on the end plate may also be used as a weight-reducing hole on the end plate.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely several embodiments of the disclosure, and for a person having ordinary skill in the art, other drawings can be obtained based on these drawings without inventive effort.
FIG. 1 is a schematic structural view of a battery module according to an embodiment of the disclosure.
FIG. 2 is a schematic structural view of cells and a frame in FIG. 1 fitted together.
FIG. 3 is a schematic structural view of the frame in FIG. 1.
FIG. 4 is a schematic view of the cells in FIG. 1.
FIG. 5 is a schematic structural view of a first end plate in FIG. 1.
FIG. 6 is a schematic structural view of the first end plate in FIG. 1 from another viewing angle.
FIG. 7 is a schematic view from a front side of the first end plate and an output terminal base in FIG. 1 fitted together.
FIG. 8 is a schematic view from a back side of the first end plate and the output terminal base in FIG. 1 fitted together.
FIG. 9 is a schematic exploded view of the first end plate and the output terminal base in FIG. 8 fitted together.
FIG. 10 is a schematic enlarged view of a structure of a region C in FIG. 9.
FIG. 11 is a schematic top view of the first end plate and the output terminal base in FIG. 8 fitted together.
FIG. 12 is a schematic local cross-sectional view taken alone A-A in FIG. 11.
FIG. 13 is a schematic front view of the first end plate and the output terminal base in FIG. 8 fitted together.
FIG. 14 is a schematic local cross-sectional view of a structure taken alone B-B in FIG. 13.
FIG. 15 is a schematic structural view of a battery pack according to an embodiment of the disclosure.

### Description of reference numerals:

battery module 100, frame 10, cell 20, output terminal base 30, side plate 11, first end plate 12, second end plate 13, high-voltage output terminal installation portion 31, high-voltage output sheet 311, threaded hole 312, low-voltage output terminal installation portion 32, limiting portion 33, limiting groove 121, installation groove 122, first limiting portion 331, second limiting portion 332, third limiting portion 333, first limiting groove 1211, second limiting groove 1212, third limiting groove 1213, first protrusion 3301, weight-reducing hole 1201, first side wall 1202, second side wall 1203, cell terminal 201, low-voltage connector 202, hook structure 321, reinforcing plate 34, second protrusion 341, and box body 200.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

It should be noted that the drawings provided in the embodiments are merely schematically illustrating the basic idea of the disclosure. Therefore, the drawings only show components related to the disclosure rather than drawings which are depicted according to the numbers, shapes, and sizes of the components in actual implementation. In actual implementation, the types, numbers, and proportions of the components can be changed arbitrarily, and the component layout type may also be more complex.

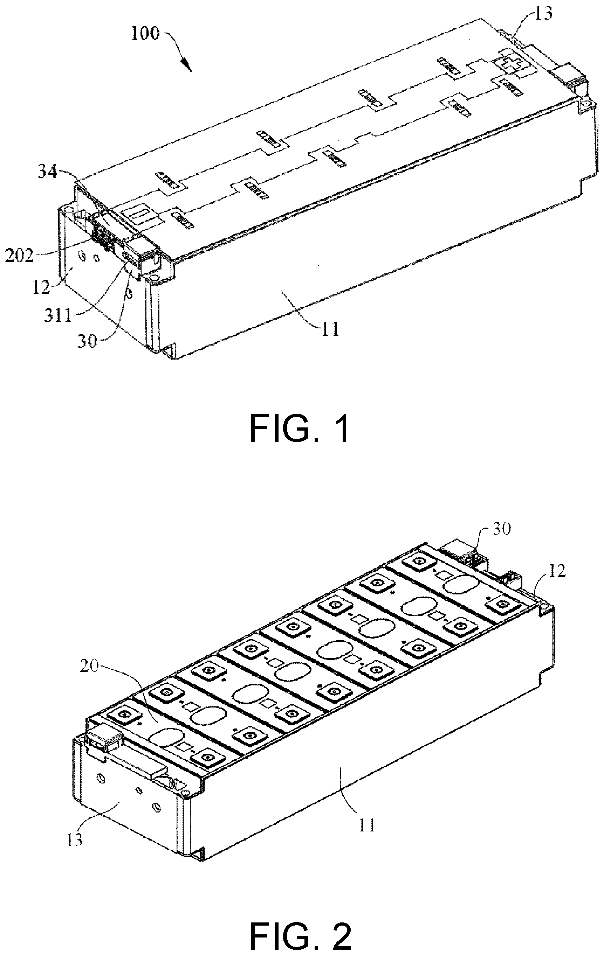

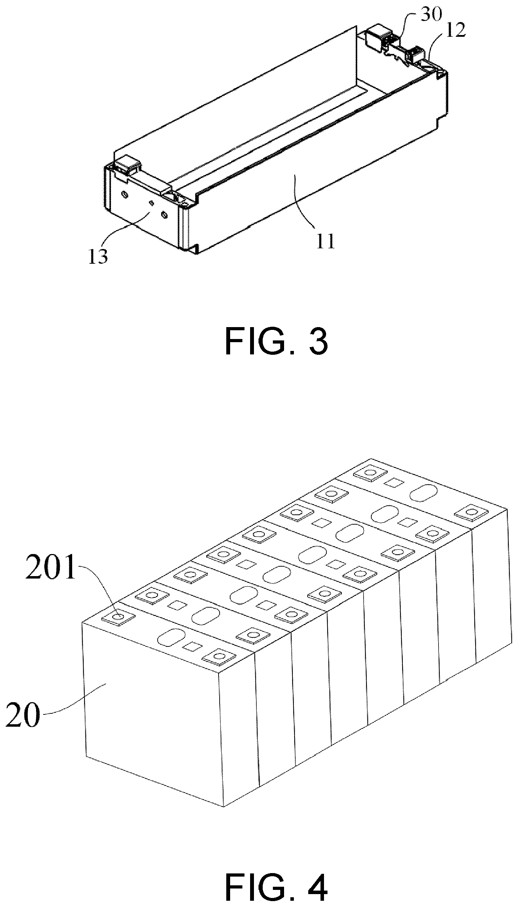

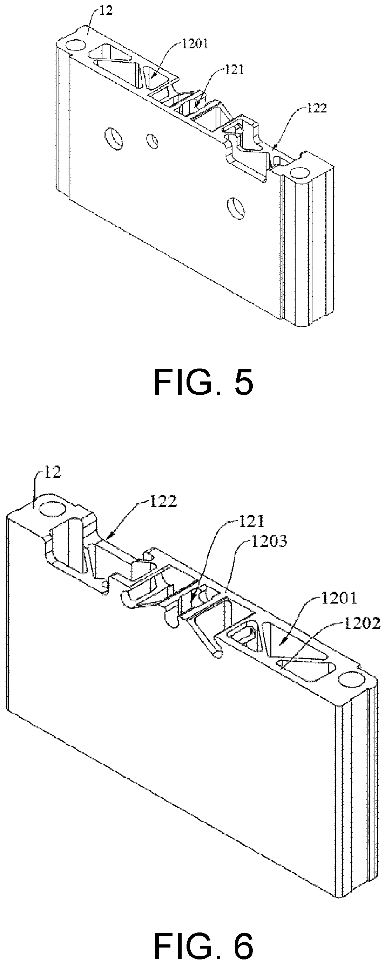

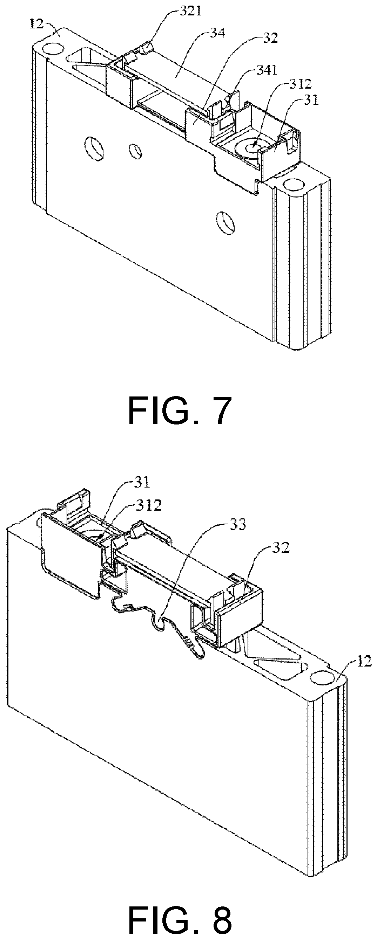

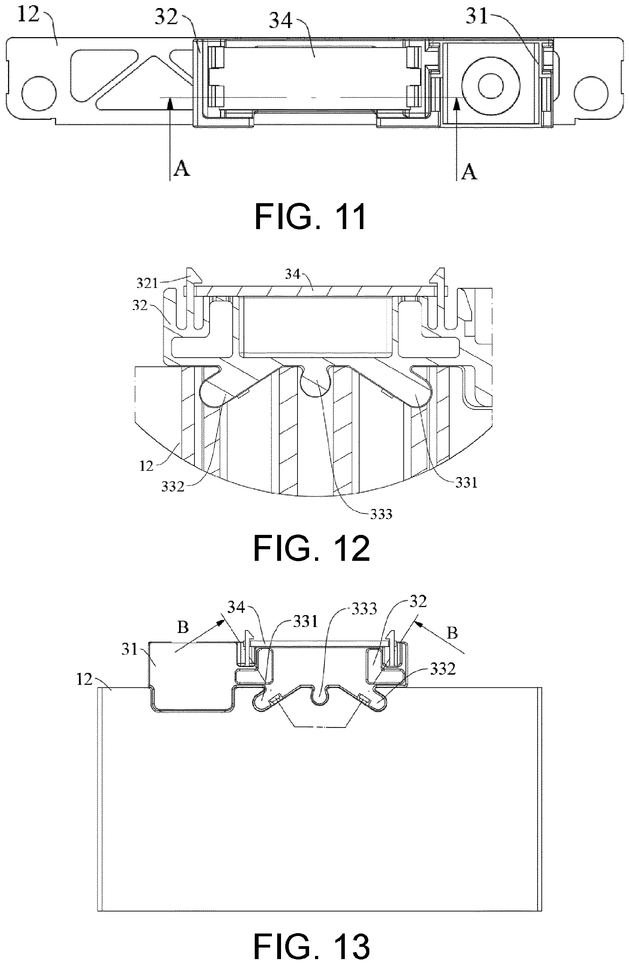

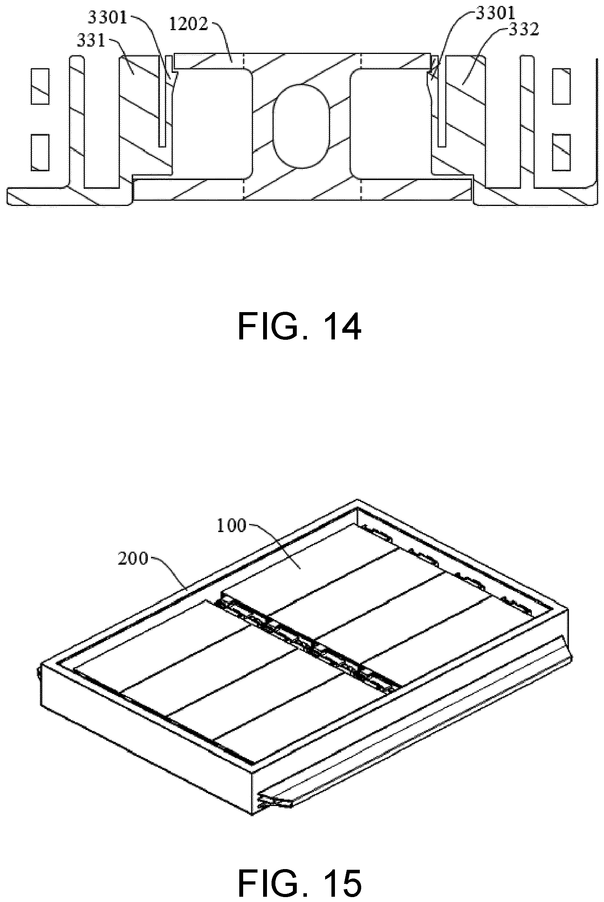

With reference to FIG. 1 to FIG. 15, in this embodiment, the disclosure provides a battery module and a battery pack to address the problem of unreliable fixing between a high-voltage output terminal and an FPC low-voltage connector found in the currently-available installation method for an output terminal base. To be specific, a battery module 100 includes a frame 10, a plurality of cells 20, and an output terminal base 30. Herein, the frame 10 includes side plates 11 opposite to each other and a group of end plates opposite to each other. The end plates include a first end plate 12 and a second end plate 13. The side plates 11, the first end plate 12, and the second end plate 13 are fixedly connected in sequence to form the frame 10. The plurality of cells 20 are stacked in sequence, installed in the frame 10 after being stacked in sequence, and fixed by the pressing effect of the side plates 11 and the end plates. The output terminal base 30 is fixedly installed on the first end plate 12 of the frame 10.

With reference to FIG. 1 to FIG. 8, in this embodiment, the output terminal base 30 includes a high-voltage output terminal installation portion 31, a low-voltage output terminal installation portion 32, and a limiting portion 33. Herein, the high-voltage output terminal installation portion 31 is configured to allow a high-voltage output sheet 311 to be installed, so as to output the electric energy of the battery module 100 to an electrical apparatus for powering the electrical apparatus. The low-voltage output terminal installation portion 32 is configured to allow a low-voltage connector to be installed, so as to output low-voltage information such as electrical signals and temperature signals of the plurality of cells 20 collected by a sampling assembly. To be specific, the high-voltage output terminal installation portion 31 and the low-voltage output terminal installation portion 32 are arranged side by side, and the limiting portion 33 is formed by extending from a bottom portion of the low-voltage output terminal installation portion 32. For instance, the limiting portion 33 is formed by extending downwards from the bottom portion of the low-voltage output terminal installation portion 32. That is, the high-voltage output terminal installation portion 31 and the low-voltage output terminal installation portion 32 are integrated on the output terminal base 30 and are fixedly installed with the first end plate 12 through the limiting portion 33. In this way, a simple structure and high integration are provided, and compatibility with a cells contact system assembly is achieved. To be specific, a top portion of the first end plate 12 is provided with a limiting groove 121 and an installation groove 122. The high-voltage output terminal installation portion 31 is installed in the installation groove 122, and the limiting portion 33 is installed in the limiting groove 121 to fixedly install the output terminal base 30 onto the first end plate 12. That is, by integrating the high-voltage output terminal installation portion 31 and the low-voltage output terminal installation portion 32, a simple structure and high integration are provided. It should be noted that the output terminal base 30 is a plastic member for insulation and protection, and improved safety is thus provided.

With reference to FIG. 1 and FIG. 7 to FIG. 9, in this embodiment, a threaded hole 312 is arranged in the high-voltage output terminal installation portion 31, and correspondingly, an through hole corresponding to the threaded hole 312 is arranged on the high-voltage output sheet 311. A fastening bolt is allowed to pass through the through hole on the high-voltage output sheet 311 and to be connected to the threaded hole 312, so that the high-voltage output sheet 311 is fixed in the high-voltage output terminal installation portion 31. In some embodiments, when two or more battery modules 100 are connected to each other, two adjacent battery modules 100 are electrically connected to each other through a copper bar. Both ends of the copper bar are electrically connected to the high-voltage output sheets311 of the two battery modules 100. That is, ends of the copper bar connected to the high-voltage output sheet 311are also installed in the relative high-voltage output terminal installation portion 31. To be specific, an end portion of the copper bar is provided with a through hole as well, and the through hole corresponds to the through hole on the high-voltage output sheet 311 and the threaded hole 312. The fastening bolt is allowed to pass through the through hole on copper bar and the through hole on the high-voltage output sheet 311 and to be connected to the threaded hole 312, so that the copper bar and the high-voltage output sheet 311 are fixedly installed in the high-voltage output terminal installation portion 31.

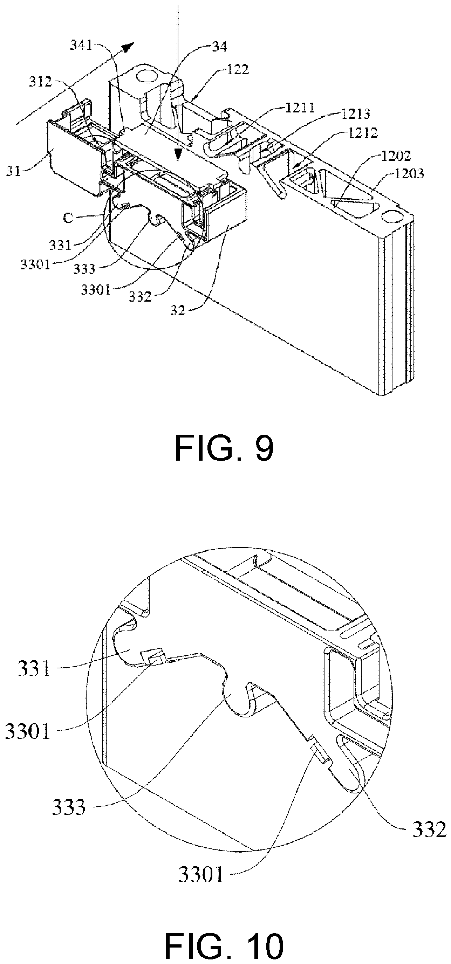

With reference to FIG. 9 to FIG. 14, in this embodiment, the limiting portion 33 includes a first limiting portion 331, a second limiting portion 332, and a third limiting portion 333. The first limiting portion 331 and the second limiting portion 332 are formed by extending away from a vertical direction. The third limiting portion 333 is located between the first limiting portion 331 and the second limiting portion 332, and the third limiting portion 333 is arranged in the vertical direction. That is, the first limiting portion 331 and the second limiting portion 332 are located on two sides of the third limiting portion 333 and are formed by deviating and extending in a direction away from the third limiting portion 333. Through the fixed connection between the plurality of limiting portions and the first end plate 12, the limiting effect is improved, and the reliability of the fixed connection between the limiting portions and the first end plate 12 is ensured.

With reference to FIG. 9 to FIG. 14, in this embodiment, the limiting groove 121 includes a first limiting groove 1211, a second limiting groove 1212, and a third limiting groove 1213respectively corresponding to the first limiting portion 331, the second limiting portion 332, and the third limiting portion 333. The first limiting portion 331, the second limiting portion 332, and the third limiting portion 333 are respectively installed in the first limiting groove 1211, the second limiting groove 1212, and the third limiting groove 1213 in a thickness direction of the first end plate 12 to fix the output terminal base 30 onto the first end plate 12. In this way, it is difficult for the limiting portion 33 on the bottom portion of the output terminal base 30 to be detached from the limiting groove 121 on the first end plate 12, and thus the limiting effect between the output terminal base 30 and the first end plate 12 is enhanced.

With reference to FIG. 9 to FIG. 14, in this embodiment, at least one of the first limiting portion 331 and the second limiting portion 332 is provided with a sub-limiting portion, . The corresponding limiting groove on the first end plate 12 is provided with a sub-limiting groove, and the sub-limiting portion is connected to the sub-limiting groove in a concave-convex manner to form a limiting structure. For instance, the sub-limiting portion may be formed as a first protrusion 3301, and first protrusions 3301 are provided on facing sides of both the first limiting portion 331 and the second limiting portion 332. When the output terminal base 30 is installed on the first end plate 12 in the thickness direction of the first end plate 12, the first protrusion 3301 is located in the limiting groove 121 and forms a limiting structure with an inner wall of the first end plate 12. To be specific, in this embodiment, each of the first end plate 12 and the second end plate is provided with a plurality of weight-reducing holes 1201. The weight-reducing holes 1201 pass through the limiting groove 121 or the installation groove 122 to reduce weights of the end plates. That is, in this embodiment, a plurality of cavity structures are arranged in the first end plate 12, and the first end plate 12 includes a first side wall 1202 in contact with the cells 20 and a second side wall 1203 away from the cells 20. When the output terminal base 30 is installed on the first end plate 12 in the thickness direction of the first end plate 12, the first protrusions 3301 are located in the cavities in the first end plate 12 to interfere with the first side wall 1202 to form a limiting structure. In this way, the limiting effect between the output terminal base 30 and the first end plate 12 is further improved, and the output terminal base 30 is further limited.

With reference to FIG. 9 to FIG. 14, in this embodiment, the limiting groove 121 is formed by extending from an inner side to an outer side of the first end plate 12 in the thickness direction of the first end plate 12. Herein, the side of the first end plate 12 close to the cells 20 is the inner side, and the side away from the cells 20 is the outer side. An outer side wall of the first end plate 12 closes an end surface of the limiting groove 121. That is, the limiting groove 121 passes through the first side wall 1202 in the thickness direction of the first end plate 12 and does not stop extending until reaching the second side wall 1203 in the thickness direction. As such, the second side wall 1203 closes the end surface of the limiting groove 121, so that the limiting part 33 may only be installed into the limiting groove 121 from the inner side of the first end plate 12 in its thickness direction. The movement of the output terminal base 30 in the thickness direction of the first end plate 12 is restricted under the fitting between the first protrusions 3301 and the second side wall 1203, so that the output terminal base 30 is better fixed.

In another embodiment, the limiting portion 33 may further be formed as a plurality of elastic members, and the elastic members are engaged in the limiting groove. Through the elastic action of the elastic members, an interference fit is generated between the elastic members and the limiting groove, so that the output terminal base 30 is fixed on the first end plate 12.

With reference to FIG. 9 to FIG. 14, in this embodiment, the plurality of cells 20 in the battery module 100 are connected onto cell terminals 201 of the cells 20 through a connection sheet, so as to electrically connect the cells 20 to one another. Further, the high-voltage output sheet 311 is installed in the high-voltage output terminal installation portion 31, and the high-voltage output sheet 311 is electrically connected to the connection sheet to achieve high-voltage output. In addition, the battery module 100 further includes an FPC assembly. The FPC assembly is welded and connected to the connection sheet connecting different cells 20 in the battery module 100 through a sampling terminal, so as to collect low-voltage information such as electrical signals and temperature signals of the plurality of cells 20. In some other embodiments, the battery module 100 further includes a cells contact system assembly, and the cells contact system assembly is electrically connected to the plurality of cells 20. The cells contact system assembly includes a sampling assembly and a high-voltage output sheet. Herein, the sampling assembly includes a flexible circuit board (not shown) and a low-voltage connector 202. The flexible circuit board is electrically connected to the cells 20. The low-voltage connector 202 is installed on the low-voltage output terminal installation portion 32 and is electrically connected to the flexible circuit board, so as to output low-voltage information such as electrical signals and temperature signals of the plurality of cells 20 collected by the sampling assembly. The high-voltage output sheet 311 is installed in the high-voltage output terminal installation portion 31 and is electrically connected to the cells 20, so as to output the electric energy of the battery module 100 to the electrical apparatus for powering the electrical apparatus. Herein, compared with the structure that uses a separate FPC assembly and connecting piece to connect the cells to achieve sampling, the cells contact system assembly is easier to install, so the installation efficiency and the grouping efficiency of the battery module may thus be improved.

With reference to FIG. 9 to FIG. 14, in this embodiment, the low-voltage output terminal installation portion 32 further includes hook structures 321. The hook structures 321 are formed by extending from both sides of a top portion of the low-voltage output terminal installation portion 32 in a direction away from the low-voltage output terminal installation portion 32. The output terminal base 30 is further provided with a reinforcing plate 34. The reinforcing plate 34 is installed on the low-voltage output terminal installation portion 32 and is located above the low-voltage connector 202. Both ends of the reinforcing plate 34 are engaged with and connected to the hook structures 321, and second protrusions 341 are formed on both ends of the reinforcing plate 34. When the reinforcing plate 34 is installed on the low-voltage output terminal installation portion 32, the second protrusion 341 at each end is located between the hook structures 321 on a same side of the low-voltage output terminal installation portion 32. In this way, the reinforcing plate 34 is fixed onto the low-voltage output terminal installation portion 32, so that the low-voltage connector 202 is fixed, and the structural strength is enhanced.

With reference to FIG. 1 to FIG. 15, the disclosure further provides a battery pack. The battery pack includes a box body 200, and the box body 200 is provided with at least one battery module 100. The structure of the battery module 100 is similar or identical to that of the battery module 100 described in the abovementioned embodiments, and description thereof is thus not repeated herein to avoid repetition.

The disclosure provides a battery module and a battery pack. In the battery module, after the output terminal base is installed on the end plate, the inner surface of the end plate is close to the main bodies of the cells, it is thus difficult for the limiting portion on the bottom portion of the output terminal base to be detached from the limiting groove on the end plate, and a good limiting effect is thereby provided. Further, the high-voltage output terminal installation portion and the low-voltage output terminal installation portion are integrated on the output terminal base. In this way, a simple structure and high integration are provided, and compatibility with the cells contact system assembly is achieved. Further, the limiting groove on the end plate may also be used as a weight-reducing hole on the end plate.

## Claims

1. A battery module (100), comprising:
a frame (10) comprising side plates (11) opposite to each other and a first end plate (12) and a second end plate (13) opposite to each other;
a plurality of cells (20) stacked and installed in the frame (10); and
an output terminal base (30) comprising a high-voltage output terminal installation portion (31), a low-voltage output terminal installation portion (32), and a limiting portion (33), wherein the high-voltage output terminal installation portion (31) and the low-voltage output terminal installation portion (32) are arranged side by side, and the limiting portion (33) is formed by extending from a bottom portion of the low-voltage output terminal installation portion (32),
wherein a top portion of the first end plate (12) is provided with a limiting groove (121) and an installation groove (122), the high-voltage output terminal installation portion (31) is installed in the installation groove (122), and the limiting portion (33) is installed in the limiting groove (121) to connect the output terminal base (30) to the first end plate (12).

2. The battery module (100) according to claim 1, wherein the battery module (100) further comprises a cells contact system assembly, the cells contact system assembly is electrically connected to the cells (20), the cells contact system assembly comprises a sampling assembly and a high-voltage output sheet (311), the sampling assembly comprises a flexible circuit board and a low-voltage connector (202), the flexible circuit board is electrically connected to the cells (20), the low-voltage connector (202) is installed on the low-voltage output terminal installation portion (32) and is electrically connected to the flexible circuit board, and the high-voltage output sheet (311) is installed in the high-voltage output terminal installation portion (31) and is electrically connected to the cells (20).

3. The battery module (100) according to claim 1 or claim 2, wherein a threaded hole (312) is arranged in the high-voltage output terminal installation portion (31), the high-voltage output sheet (311) is installed on the high-voltage output terminal installation portion (31), and a through hole corresponding to the threaded hole (312) is arranged on the high-voltage output sheet (311).

4. The battery module (100) according to any one of claims 1 to 3, wherein the first end plate (12) or the second end plate (13) is provided with a plurality of weight-reducing holes (1201), and the weight-reducing holes (1201) pass through the limiting groove (121) or the installation groove (122).

5. The battery module (100) according to any one of claims 1 to 4, wherein the low-voltage output terminal installation portion (32) further comprises hook structures (321), and the hook structures (321) are formed by extending from both sides of a top portion of the low-voltage output terminal installation portion (32) in a direction away from the low-voltage output terminal installation portion (32).

6. The battery module (100) according to any one of claims 1 to 5, wherein the battery module (100) further comprises a reinforcing plate (34), the reinforcing plate (34) is installed on the low-voltage output terminal installation portion (32) and is located above the low-voltage connector (202), and both ends of the reinforcing plate (34) are engaged with and connected to the hook structures (321).

7. The battery module (100) according to any one of claims 1 to 6, wherein protrusions are formed on both ends of the reinforcing plate (34), and the protrusion at each end is located between the hook structures (321) on a same side of the low-voltage output terminal installation portion (32).

8. The battery module (100) according to any one of claims 1 to 7, wherein the limiting groove (121) is formed by extending from an inner side to an outer side of the first end plate (12) in a thickness direction of the first end plate (12), and an outer side wall of the first end plate (12) closes an end surface of the limiting groove (121).

9. The battery module (100) according to any one of claims 1 to 8, wherein the limiting portion (33) comprises a first limiting portion (331), a second limiting portion (332), and a third limiting portion (333), the first limiting portion (331) and the second limiting portion (332) are formed by extending away from a vertical direction, the third limiting portion (333) is located between the first limiting portion (331) and the second limiting portion (332) and is arranged in the vertical direction, the limiting groove (121) comprises a first limiting groove (1211), a second limiting groove (1212), and a third limiting groove (1213) respectively corresponding to the first limiting portion (331), the second limiting portion (332), and the third limiting portion (333), and the first limiting portion (331), the second limiting portion (332), and the third limiting portion (333) are respectively installed in the first limiting groove (1211), the second limiting groove (1212), and the third limiting groove (1213) in a thickness direction of the first end plate (12) to fix the output terminal base (30).

10. The battery module (100) according to any one of claims 1 to 9, wherein at least one of the first limiting portion (331) and the second limiting portion (332) is provided with a sub-limiting portion, the limiting groove (121) is provided with a sub-limiting groove, and the sub-limiting portion is connected to the sub-limiting groove in a concave-convex manner.

11. The battery module (100) according to any one of claims 1 to 10, wherein the limiting portion (33) comprises a plurality of elastic members, and the elastic members are engaged in the limiting groove (121).

12. The battery module (100) according to any one of claim 1 to 11, wherein the output terminal base (30) is a plastic member.

13. A battery pack comprising a box body (200), wherein the battery module (100) according to any one of claims 1 to 12 is installed in the box body (200).
